# DEMANDE DE BREVET EUROPEEN

(11) **EP 4 579 694 A1**
(43) Date de publication de la demande: **02.07.2025**
(21) Numéro de dépôt: 24218769.8
(22) Date de dépôt: 10.12.2024
(51) Int. Cl.: H01F 3/10, H01F 3/14, H01F 27/26, H01F 27/28, H01F 27/30, H01F 27/38, H02M 1/32, H02M 3/335

(54) **COMPOSANT ÉLECTROMAGNÉTIQUE INTÉGRÉ, INSTALLATION ÉLECTRIQUE COMPORTANT UN TEL COMPOSANT ÉLECTROMAGNÉTIQUE INTÉGRÉ, ET ENGIN DE MOBILITÉ COMPORTANT UNE TELLE INSTALLATION ÉLECTRIQUE**

(30) Priorité: 31.12.2023 FR 2315545
(71) Demandeur: Valeo eAutomotive Germany GmbH, 91056 Erlangen (DE)
(72) Inventeur: DA-CUNHA-ALVES, Wendell, 95892 Cergy Pontoise (FR); DADANEMA, Gnimdu, 95892 Cergy Pontoise (FR); LIU, Xiaoshan, 95892 Cergy Pontoise (FR)
(74) Mandataire: Valeo Powertrain Systems

(57) **Abrégé**

Le composant (400) comporte : - un noyau magnétique (K) formant : • une première boucle (402A) et une deuxième boucle (402B) ayant une portion commune (404), • une troisième boucle (502A) ayant une portion commune (504A) avec la première boucle (402A) et/ou la deuxième boucle (402B), et • une quatrième boucle (502B) ayant une portion commune (504B) avec la première boucle (402A) et/ou la deuxième boucle (402B) ; - au moins deux premiers enroulements (W1A, W2A, W3A) enroulés autour de la première boucle (406A) pour être magnétiquement couplés, hors des portions communes (404, 504A, 504B) ; - au moins deux deuxièmes enroulements (W1B, W2B, W3B) enroulés autour de la deuxième boucle (406B) pour être magnétiquement couplés, hors des portions communes (404, 504A, 504B) ; - un troisième enroulement (508A) enroulé autour de la troisième boucle (502A), hors des portions communes (404, 504A, 504B) ; et - un quatrième enroulement (508B) enroulé autour de la quatrième boucle (502B), hors des portions communes (404, 504A, 504B).

## Description

### Domaine technique de l'invention

La présente invention concerne un composant électromagnétique intégré, installation électrique comportant un tel électromagnétique intégré, et engin de mobilité comportant une telle installation électrique.

Un engin de mobilité est par exemple un véhicule terrestre à moteur, un train, un aéronef ou bien un drone. Un véhicule terrestre à moteur est par exemple un véhicule automobile, une moto, un vélo motorisé ou bien un fauteuil roulant motorisé.

Dans la description et les revendications qui vont suivre, un commutateur est un composant comportant au moins un interrupteur commandable à semi-conducteur, tel qu'un transistor, comme par exemple un transistor à effet de champ à grille métal-oxyde (de l'anglais « Metal Oxide Semiconductor Field Effect Transistor » également désigné par l'acronyme MOSFET) ou bien un transistor à effet de champ à grille métal-oxyde silicium (de l'anglais « Silicon Metal Oxide Semiconductor Field Effect Transistor » également désigné par l'acronyme Si MOSFET) ou bien un transistor à effet de champ à grille métal-oxyde au carbure de silicium (de l'anglais « Silicon Carbide Metal Oxide Semiconductor Field Effect Transistor » également désigné par l'acronyme SiC MOSFET) ou bien un transistor bipolaire à grille isolée (de l'anglais « Insulated Gate Bipolar Transistor » également désigné par l'acronyme IGBT) ou bien un transistor à effet de champ au nitrure de gallium (de l'anglais « Gallium Nitride Field Effect Transistor » également désigné par l'acronyme GaN FET).

### Arrière-plan technologique

La demande de brevet publiée sous le numéro CN 101404454 A décrit un composant électromagnétique intégré mettant en oeuvre deux transformateurs.

La demande de brevet publiée sous le numéro CN 108109821 A décrit un composant électromagnétique intégré mettant en oeuvre un transformateur et une inductance.

Dans un soucis d'intégration encore plus important, il peut ainsi être souhaité de prévoir un composant électromagnétique intégré mettant en oeuvre deux transformateurs et deux inductances.

### Résumé de l'invention

Il est donc proposé un composant électromagnétique intégré, caractérisé en ce qu'il comporte :
- un noyau magnétique formant :
   - une première boucle et une deuxième boucle ayant une portion commune,
   - une troisième boucle ayant une portion commune avec la première boucle et/ou la deuxième boucle, et
   - une quatrième boucle ayant une portion commune avec la première boucle et/ou la deuxième boucle ;
- au moins deux premiers enroulements enroulés autour de la première boucle pour être magnétiquement couplés, hors des portions communes ;
- au moins deux deuxièmes enroulements enroulés autour de la deuxième boucle pour être magnétiquement couplés, hors des portions communes ;
- un troisième enroulement enroulé autour de la troisième boucle, hors des portions communes ; et
- un quatrième enroulement enroulé autour de la quatrième boucle, hors des portions communes.

Ainsi, grâce à l'invention, il est possible d'intégrer deux transformateurs et deux inductances avec un unique noyau magnétique. Cela permet d'améliorer la compacité pour obtenir une plus grande densité de puissance, tout en diminuant les coûts.

L'invention peut en outre comporter l'une ou plusieurs des caractéristiques optionnelles suivantes, selon toute combinaison techniquement possible.

De façon optionnelle, le composant comprend au moins trois premiers enroulements enroulés autour de la première boucle pour être magnétiquement couplés, hors des portions communes.

De façon optionnelle, le composant comprend au moins trois deuxièmes enroulements enroulés autour de la deuxième boucle pour être magnétiquement couplés, hors des portions communes.

De façon optionnelle, les troisième et quatrième boucle présentent une portion commune, les enroulements étant situés hors de cette portion commune.

De façon optionnelle également, le noyau magnétique comporte :
- une branche centrale ;
- des première et deuxième branches latérales ; et
- trois branches transverses s'étendant d'une des branches latérales à l'autre en traversant la branche centrale.

De façon optionnelle également, les premiers enroulements sont enroulés autour de la première branche latérale et les deuxièmes enroulements sont enroulés autour de la deuxième branche latérale.

De façon optionnelle également, une ou plusieurs des branches sont droites.

De façon optionnelle également, une ou plusieurs des branches ont une section rectangulaire.

De façon optionnelle également, une ou plusieurs des boucles présentent un entrefer, unique ou bien distribué.

Par une boucle présente un entrefer on signifie que sur le chemin de ladite boucle, le noyau magnétique comprend un entrefer.

Par entrefer distribué on entend que cet entrefer peut être réalisé sous la forme de plusieurs entrefers répartis le long d'une même portion du noyau magnétique, en opposition à l'entrefer unique.

De façon optionnelle également, le ou les entrefers sont situés hors de la branche centrale.

De façon optionnelle également, le troisième enroulement est réalisé avec un même fil qu'un des premiers enroulements et/ou le quatrième enroulement est réalisé avec un même fil qu'un des deuxième enroulements.

De façon optionnelle également, au moins un des premiers enroulements est réalisé par une feuille ou bien une barre omnibus et/ou au moins un des deuxièmes enroulements est réalisé par une feuille ou bien une barre omnibus.

Il est également proposé une installation électrique pour un engin de mobilité, comportant :
- une prise de charge destinée à recevoir une tension alternative ;
- des première et deuxième batteries haute tension ;
- des premier et deuxième réseaux basse tension ; et
- un système de distribution électrique interconnectant la prise de charge, les batteries haute tension et les réseaux basse tension, comportant :
   - une capacité d'entrée,
   - un convertisseur AC-DC entre la prise de charge et la capacité d'entrée ;
   - un premier transformateur,
   - un premier convertisseur dit de charge, DC-DC, bidirectionnel et isolé, entre la capacité d'entrée et la première batterie haute tension, comportant : - un enroulement primaire et un enroulement secondaire du premier transformateur couplés l'un à l'autre, - une première inductance en série avec l'un de l'enroulement primaire et de l'enroulement secondaire du premier transformateur, - un convertisseur entre la capacité d'entrée et l'enroulement primaire du premier transformateur et, le cas échéant, la première inductance, et - un convertisseur entre, d'une part, l'enroulement secondaire du premier transformateur et, le cas échéant, la première inductance et, d'autre part, la première batterie haute tension,
   - un premier convertisseur dit d'alimentation, DC-DC, bidirectionnel et isolé, entre la première batterie haute tension et le premier réseau basse tension, comportant : - un enroulement tertiaire du premier transformateur couplé à l'enroulement secondaire du premier transformateur, - le convertisseur entre, d'une part, l'enroulement secondaire du premier transformateur et, le cas échéant, la première inductance et, d'autre part, la première batterie haute tension, et - un convertisseur entre, d'une part, l'enroulement tertiaire du premier transformateur, d'autre part, le premier réseau basse tension,
   - un deuxième transformateur,
   - un deuxième convertisseur dit de charge, DC-DC, bidirectionnel et isolé, entre la capacité d'entrée et la deuxième batterie haute tension, comportant : - un enroulement primaire et un enroulement secondaire du deuxième transformateur couplés l'un à l'autre, - une inductance deuxième en série avec l'un de l'enroulement primaire et de l'enroulement secondaire du deuxième transformateur, - un convertisseur entre la capacité d'entrée et l'enroulement primaire du deuxième transformateur et, le cas échéant, la deuxième inductance, et - un convertisseur entre, d'une part, l'enroulement secondaire du deuxième transformateur et, le cas échéant, la deuxième inductance et, d'autre part, la deuxième batterie haute tension,
   - un deuxième convertisseur dit d'alimentation, DC-DC, bidirectionnel et isolé, entre la deuxième batterie haute tension et le deuxième réseau basse tension, comportant : - un enroulement tertiaire du deuxième transformateur couplé à l'enroulement secondaire du deuxième transformateur, - le convertisseur entre, d'une part, l'enroulement secondaire du deuxième transformateur et, le cas échéant, la deuxième inductance et, d'autre part, la deuxième batterie haute tension, et - un convertisseur entre, d'une part, l'enroulement tertiaire du deuxième transformateur et, d'autre part, le deuxième réseau basse tension,
   - un composant électromagnétique selon l'invention, mettant en oeuvre les transformateurs et les inductances.

Il est également proposé un engin de mobilité comportant une installation électrique selon l'invention.

### Brève description des figures

L'invention sera mieux comprise à l'aide de la description qui va suivre, donnée uniquement à titre d'exemple et faite en se référant aux dessins annexés dans lesquels :
- la figure 1 est une vue schématique d'un engin de mobilité dans lequel l'invention est mise en oeuvre,
- la figure 2 est un schéma électrique d'un système de distribution électrique présent dans l'engin de mobilité de la figure 1,
- la figue 3 reprend le schéma électrique de la figure 2 en indiquant les transferts d'énergie électrique en cas de panne d'une batterie haute tension,
- la figure 4 est une vue de face d'un composant électromagnétique intégré du système de distribution de la figure 2, sur laquelle des éléments mettant en oeuvre deux transformateurs sont indiqués,
- la figure 5 reprend la figure 4 en indiquant des éléments mettant en oeuvre deux inductances,
- la figure 6 reprend la figure 4 en indiquant des éléments d'un noyau du composant électromagnétique intégré,
- la figure 7 reprend la figure 4 en indiquant d'autres éléments du noyau du composant électromagnétique intégré,
- la figure 8 est une schéma électrique d'une variante de système de distribution électrique,
- la figure 9 est une vue de face d'un composant électromagnétique intégré du système de distribution de la figure 8,
- la figue 10 est une vue de face d'une variante de composant électromagnétique intégré, et
- la figure 11 est une schéma électrique d'une autre variante de système de distribution électrique.

### Description détaillée de l'invention

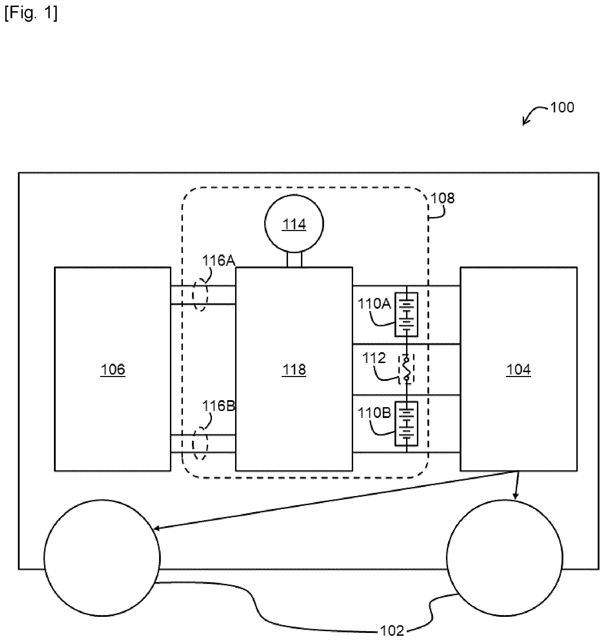

En référence à la figure 1, un engin de mobilité 100 dans lequel l'invention est mise en oeuvre va à présent être décrit. L'engin de mobilité 100 est par exemple un véhicule automobile.

L'engin de mobilité 100 comporte un système de propulsion 102, par exemple des roues motrices dans le cas d'un véhicule automobile.

L'engin de mobilité 100 comporte en outre un moteur électrique 104 d'entraînement du système de propulsion 102.

L'engin de mobilité 100 comporte en outre des équipements basse tension, désignés par la référence générale 106.

L'engin de mobilité 100 comporte en outre une installation électrique 108.

L'installation électrique 108 comporte deux batteries haute tension 110A, 110B, par exemple connectées l'une à l'autre par un interrupteur 112, par exemple un interrupteur commandable (par exemple un interrupteur à semi-conducteur) ou bien un fusible. Une haute tension est une tension continue par exemple supérieure à 100 V, de préférence supérieure à 300 V.

L'installation électrique 108 comporte en outre une prise de charge 114 conçue pour être connectée à une borne de recharge (non représentée) extérieure à l'engin de mobilité 100.

L'engin de mobilité 100 comporte en outre deux réseaux basse tension 116A, 116B. Une basse tension est une tension continue par exemple inférieure à 100 V. Chacun des équipements électriques 106 est connecté à l'un ou bien au deux réseaux basse tension 116A, 116B afin d'être alimentés de manière redondante.

L'engin de mobilité 100 comporte en outre un système de distribution électrique 118 interconnectant la prise de charge 114, les batteries haute tension 110A, 110B et les réseaux basse tension 116A, 116B.

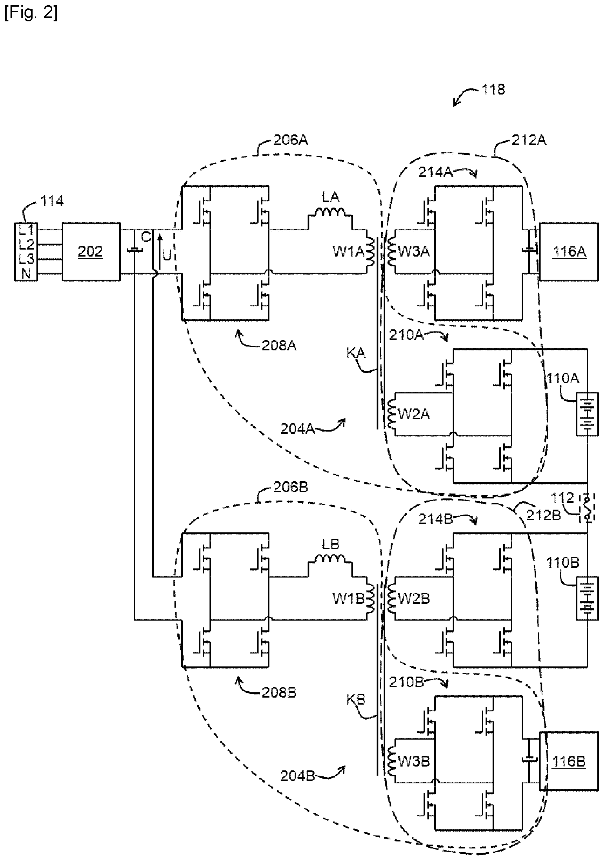

En référence à la figure 2, le système de distribution électrique 118 va à présent être décrit plus en détail.

Le système de distribution électrique 118 comporte une capacité d'entrée C et un convertisseur AC-DC 202 entre la prise de charge 114 et la capacité d'entrée C. Le convertisseur AC-DC 202 est en particulier conçu pour charger la capacité d'entrée C pour que cette dernière présente une tension d'entrée U continue.

Le système de distribution électrique 118 comporte en outre un premier transformateur 204A comportant un noyau magnétique KA et des enroulements qui seront décrits plus en détail par la suite.

### Charge de la première batterie haute tension 110A

Pour charger la première batterie haute tension 110A, le système de distribution électrique 118 comporte un premier convertisseur dit de charge 206A, DC-DC, entre la capacité d'entrée C et la première batterie haute tension 110A. Le premier convertisseur de charge 206A passe par le premier transformateur 204A et est ainsi isolé. Il est en outre de préférence bidirectionnel, comme dans l'exemple illustré.

Plus précisément, le premier convertisseur de charge 206A comporte deux enroulements W1A, W2A du premier transformateur 204A, couplés l'un à l'autre par le noyau magnétique KA, et appelés respectivement primaire et secondaire.

Le premier convertisseur de charge 206A comporte en outre une inductance LA en série avec l'un de l'enroulement primaire W1A et de l'enroulement secondaire W2A.

Le premier convertisseur de charge 206A comporte en outre un convertisseur 208A entre la capacité d'entrée C et l'enroulement primaire W1A et, le cas échéant, l'inductance LA. Le convertisseur 208A est un convertisseur AC-DC bidirectionnel. Pour la charge de la première batterie 11 0A, il est utilisé comme convertisseur DC vers AC depuis la capacité d'entrée C vers l'enroulement primaire W1A. De préférence, le convertisseur 208A comporte un pont complet actif, c'est-à-dire comportant quatre commutateurs.

Le premier convertisseur de charge 206A comporte en outre un convertisseur 210A connecté entre, d'une part, le deuxième enroulement W2A et, le cas échéant, la première inductance LA et, d'autre part, la première batterie haute tension 110A. Le convertisseur 210A est un convertisseur AC-DC bidirectionnel. Pour la charge de la première batterie 110A, il est utilisé comme convertisseur AC vers DC depuis l'enroulement secondaire W2A vers la première batterie haute tension 110A. De préférence, le convertisseur 210A comporte un pont complet actif, c'est-à-dire comportant quatre commutateurs.

### Alimentation du premier réseau basse tension 116A

Pour alimenter le premier réseau basse tension 116A à partir de la première batterie haute tension 110A, le système de distribution électrique 118 comporte un premier convertisseur dit d'alimentation 212A, DC-DC, entre la première batterie haute tension 110A et le réseau basse tension continue 116A. Le convertisseur d'alimentation 212A passe par le premier transformateur 204A et est ainsi isolé. Il est en outre de préférence bidirectionnel, comme dans l'exemple illustré.

Plus précisément, le premier convertisseur d'alimentation 212A comporte un enroulement W3A du premier transformateur 204A, appelé enroulement tertiaire, couplé à l'enroulement secondaire W2A par le noyau magnétique KA.

Le premier convertisseur d'alimentation 212A comporte en outre le convertisseur 210A, utilisé cette fois comme convertisseur DC vers AC depuis la première batterie 110A vers l'enroulement secondaire W2A.

Le premier convertisseur d'alimentation 212A comporte en outre un convertisseur 214A entre l'enroulement tertiaire W3A et le réseau basse tension 116A. Le convertisseur 214A est un convertisseur AC-DC bidirectionnel. Pour l'alimentation du premier réseau basse tension 116A, il est utilisé comme convertisseur AC vers DC depuis l'enroulement tertiaire W3A vers le premier réseua basse tension. De préférence, le convertisseur 214A comporte un pont complet actif, c'est-à-dire comportant quatre commutateurs.

Des convertisseurs similaires à ceux décrits précédemment sont prévus pour la charge de la deuxième batterie haute tension 110B et l'alimentation du deuxième réseau basse tension 116B. Ils sont désignés, ainsi que leurs composants, par la lettre B à la place de la lettre A.

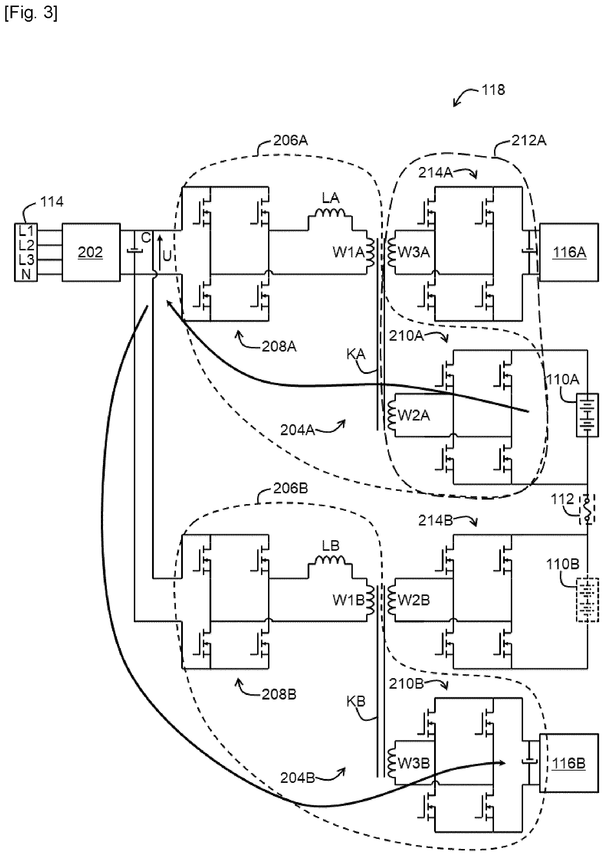

En référence à la figure 3, de préférence, le système d'alimentation 118 est robuste en cas de panne d'une des batteries haute tension 110A, 110B., pour l'alimentation des réseaux basse tension 116A, 116B.

Par exemple, dans le cas d'une panne de la deuxième batterie haute tension 110B, le premier convertisseur 206A est utilisé depuis la première batterie haute tension 110A vers la capacité d'entrée C. Ainsi, le deuxième convertisseur 206B peut être utilisé comme précédemment depuis la capacité d'entrée C vers le deuxième réseau basse tension 116B pour alimenter ce dernier. Dans le même temps, la première batterie haute tension 110A alimente le premier réseau basse tension 116A par le convertisseur 212A.

Un fonctionnement similaire est mis en oeuvre en cas de panne de la première batterie haute tension 110A, pour alimenter le premier réseau basse tension 116A à partir de la deuxième batterie haute tension 110B.

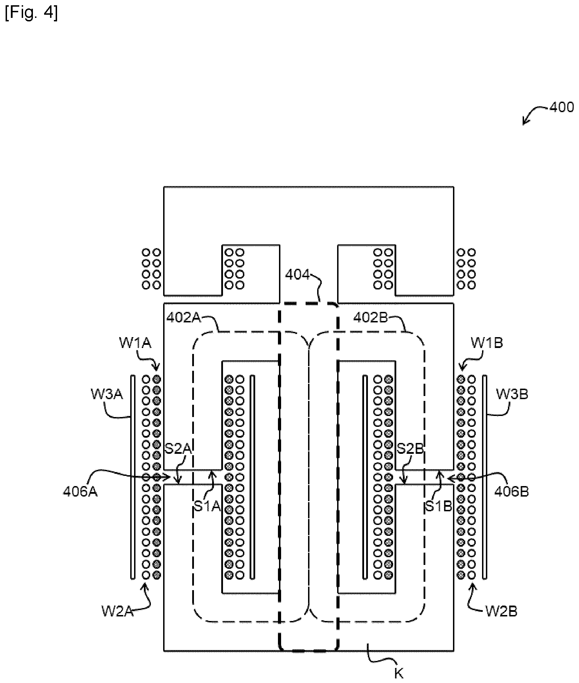

En référence aux figures 4 à 7, le système 118 comporte un composant électromagnétique intégré 400 mettant en oeuvre les premier et deuxième transformateurs 204A, 204B, ainsi que les première et deuxième inductances LA, LB.

En référence à la figure 4, pour mettre en oeuvre les premier et deuxième transformateurs 204A, 204B de manière compacte, le composant électromagnétique intégré 400 comporte un unique noyau magnétique K formant les noyaux magnétiques KA, KB , ainsi que les enroulements W1A, W2A, W3A, W1A, W2A, W3A.

Le noyau magnétique présente une haute perméabilité, par exemple supérieure à 500, de préférence supérieure à 800, et est par exemple en ferrite et/ou un nanocristallin.

Plus précisément, le noyau magnétique K forme des première et deuxième boucles 402A, 402B ayant une portion commune 404.

Une boucle du noyau magnétique K correspond par exemple ) une portion du noyau magnétique K rebouclant sur elle-même, cette portion présentant zéro, un entrefer ou plusieurs entrefers (ces entrefers étant parfois appelés « entrefer distribué »). Une telle portion du noyau magnétique est conçue pour concentrer les lignes de champ magnétique, par exemple de manière à concentrer au moins 95% des lignes de champ magnétique. Les lignes de champs ainsi concentrées sont en boucle fermée, c'est-à-dire que ces lignes de champ concentrées rebouclent sur elles-mêmes. Un entrefer est par exemple formé par une coupure de la portion de noyau magnétique K le long de la boucle. Cette coupure définit un espace intercalaire délimité par exemple d'un côté par une section de la portion du noyau magnétique K et de l'autre côté par une autre partie de la portion du noyau magnétique K (par exemple une autre section ou bien une face latérale de la portion du noyau magnétique K). La section s'étend ainsi en face de l'autre partie de la portion du noyau magnétique K. Le ou les entrefers présentent par exemple une longueur comprise entre 0,5 mm et 15 mm de préférence de 10 mm maximum.

Les enroulements primaire W1A, secondaire W2A et tertiaire W3A du premier transformateur 204A sont enroulés autour de la première boucle 402A, en dehors de la portion commune 404. De manière similaire, les enroulements primaire W1 B, secondaire W2B et tertiaire W3B du deuxième transformateur 204A sont enroulés autour de la deuxième boucle 402B, en dehors de la portion commune 404.

De préférence, les enroulements W1A, W2A, W3A, d'une part, et les enroulements W1B, W2B, W3B, d'autre part, sont enroulés dans des sens tels que les deux flux magnétiques générés par les enroulements W1A, W2A, W3A, d'une part, et les enroulements W1B, W2B, W3B, d'autre part, soient de sens opposés dans la portion commune 404. Ainsi, cette dernière présente une densité de flux faible permettant à cette portion commune 404 d'avoir une petite section, en particulier par rapport au cas où il n'y aurait pas de section commune.

Par exemple, si les enroulements W1A, W2A, W3A, W1B, W2B, W3B sont connectés de manière à recevoir des tensions de même phase, les enroulements W1A, W2A, W3A sont tous enroulés selon un même premier sens, tandis que les enroulements W1B, W2B, W3B sont tous enrouler dans un même deuxième sens, opposé au premier sens.

Toujours par exemple, si les enroulements W1A, W2A, W3A, d'une part, et les enroulements W1B , W2B, W3B, d'autre part, sont connectés de manière à recevoir des tensions de phase opposée, tous les enroulements W1A, W2A, W3A, W1B, W2B, W3B sont par exemple enroulés selon un même sens.

Chacune des première et deuxième boucles 402A, 402B peut présenter un entrefer 406A, 406B, de préférence hors de la portion commune 404. Dans l'exemple illustré, chaque entrefer 406A, 406B s'étend entre deux sections S1A, S2A, respectivement S1B, S2B, de la portion du noyau magnétique K formant la boucle 402A, 402B considérée, ces deux sections S1A, S2A, respectivement S1B, S2B se faisant face l'une à l'autre.

Les enroulements W1A, W2A, W1B, W2B sont de préférence en fil magnétique (de l'anglais « magnet wire ») ou bien fil de Litz (de l'anglais « Litz wire »). L'un de l'enroulement W1A et W2A est par exemple enroulé autour de l'autre. De manière similaire, l'un de l'enroulement W1B et W2B est par exemple enroulé autour de l'autre.

L'enroulement W3A est par exemple réalisé par une feuille ou bien une barre omnibus, par exemple de cuivre, tournant autour de l'enroulement W1A et/ou W2A. De manière similaire, l'enroulement W3B est par exemple réalisé par une feuille ou une barre omnibus, par exemple de cuivre, tournant autour de l'enroulement W1B et/ou W2B. De préférence, chaque feuille ou bien barre omnibus présente une épaisseur proche de la profondeur de peau.

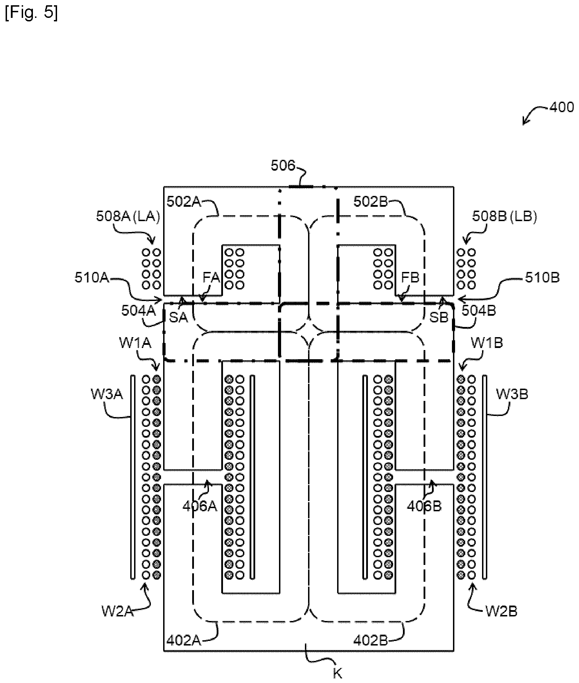

En référence à la figure 5, pour mettre en oeuvre les première et deuxième inductances LA, LB de manière compacte, le noyau magnétique K forme en outre des troisième et quatrième boucles 502A, 502B ayant chacune une portion commune 504A, 504B avec la première boucle 402A et/ou la deuxième boucle 402B.

De préférence, comme dans l'exemple illustré sur la figure 5, les troisième et quatrième boucles 502A, 502B présentent en outre une portion commune 506.

Le composant électromagnétique intégré 118 comporte alors, pour former la première inductance LA, un enroulement 508A autour de la troisième boucle 502A. De manière similaire, pour former la deuxième inductance LB, le composant électromagnétique intégré 118 comporte en outre un enroulement 508B autour de la quatrième boucle 502B. Les enroulements 508A, 508B et les enroulements W1A, W2A, W3A, W1B, W2B, W3B sont situés en dehors des portions communes 404 (visible sur la figure 4), 504, 504B, 506. Ainsi, chaque enroulement 508A, 508B est magnétiquement découplé de l'autre, ainsi que des enroulements W1A, W2A, W3A, W1 B, W2B, W3B.

Chacune des troisième et quatrième boucles 502A, 502B peut présenter un entrefer 510A, 510B, de préférence hors des portions communes 404 (visible sur la figure 4), 504, 504B, 506. Dans l'exemple illustré, chaque entrefer 510A, 510B s'étend entre une section SA et une face latérale FA (respectivement SB et FB) de la portion du noyau magnétique K formant la boucle 502A, 502B considérée, la section SA (respectivement SB) faisant face à la face latérale FA (respectivement FB).

De préférence, l'enroulement 508A est réalisé avec le même fil que l'enroulement W1A (lorsque l'inductance LA est en série avec l'enroulement W1A) ou bien que l'enroulement W2A (lorsque l'inductance LA est en série avec l'enroulement W2A). De manière similaire, l'enroulement 508B est réalisé avec le même fil que l'enroulement W1 B (lorsque l'inductance LB est en série avec l'enroulement W1 B) ou bien que l'enroulement W2B (lorsque l'inductance LB est en série avec l'enroulement W2B).

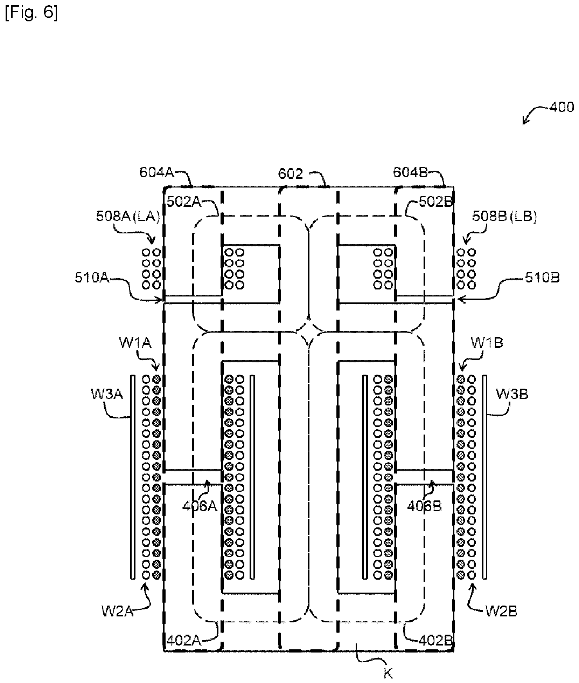

En référence à la figure 6, pour réaliser les quatre boucles 402A, 402B, 406A, 406B, le noyau magnétique K comporte par exemple une branche centrale 602, deux branches latérales 604A, 604B.

De préférence, les entrefers 406A, 406B, 510A, 510B sont situés hors de la branche centrale 602, par exemple sur les branches latérales 604A, 604B.

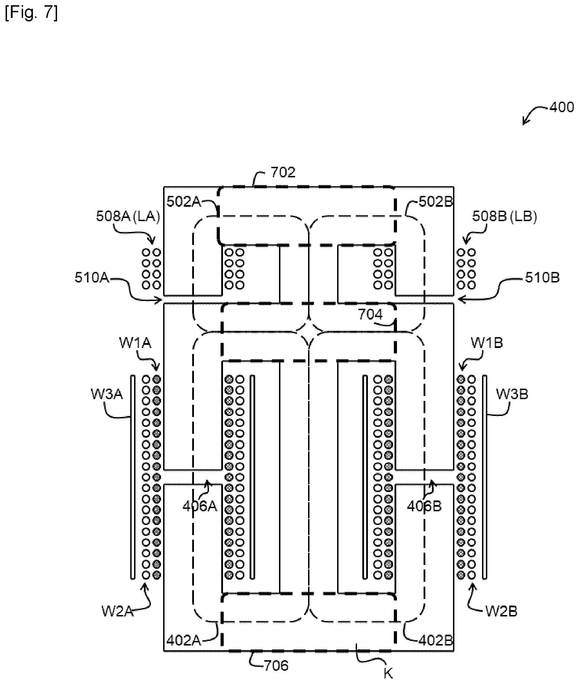

En référence à la figure 7, le noyau magnétique K comporte en outre trois branches transverses 702, 704, 706 s'étendant d'une des branches latérales 604A, 604B à l'autre en traversant la branche centrale 602.

De préférence, une ou plusieurs des branches 602, 604A, 604B, 606, 608, 610, par exemple toutes comme dans l'exemple illustré, sont droites.

Comme illustré, le ou les entrefers de chaque boucle présentent au total une longueur d'au plus 50% de la distance entre des deux branches transverses comprises dans cette boucle. Ainsi, l'entrefer 510A de la boucle 502A présente une longueur d'au plus 50% de la distance entre les branches transverses 702, 704. De même, l'entrefer 510B de la boucle 502B présente une longueur d'au plus 50% de la distance entre les branches transverses 702, 704. De même, l'entrefer 406A de la boucle 402A présente une longueur d'au plus 50% de la distance entre les branches transverses 704, 706. De même, l'entrefer 406B de la boucle 402B présente une longueur d'au plus 50% de la distance entre les branches transverses 704, 706.

Les enroulements W1A, W2A, W3A sont par exemple enroulés autour de la première branche latérale 604A. De manière similaire, les enroulements W1B, W2B, W3B sont par exemple enroulés autour de la deuxième branche latérale 604B.

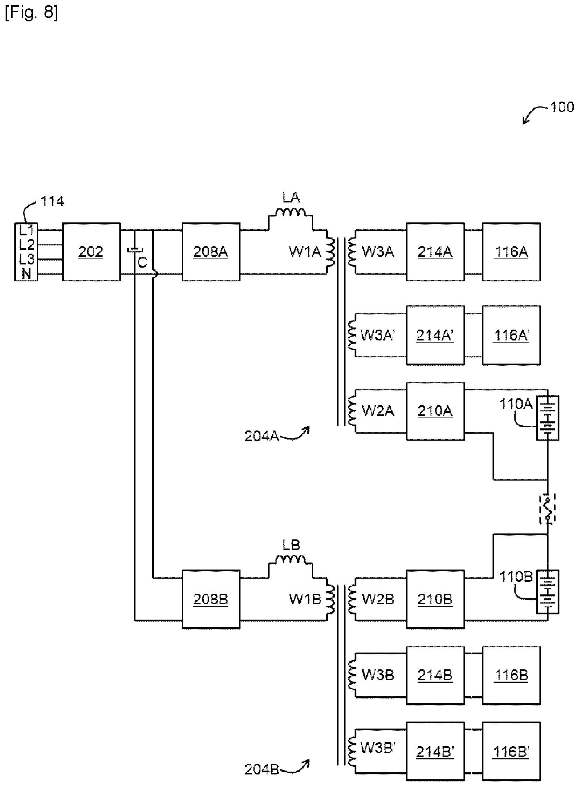

En référence à la figure 8, le système de distribution électrique 118 peut comporter, en plus du premier réseau basse tension 116A, au moins autre premier réseau basse tension 116A' et, en plus du deuxième réseau basse tension 116B, au mins un autre deuxième réseau basse tension 116B'.

Dans ce cas, le système de distribution électrique 118 comporte, pour cet autre réseau basse tension 116A', 116B', un autre troisième enroulement W3A', W3B' et un autre convertisseur 214A', 214B', comme pour les réseaux basses tension 116A, 116B.

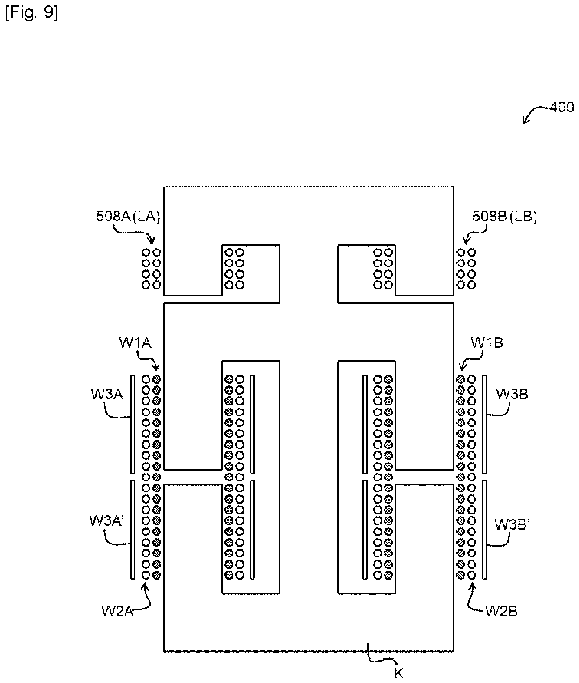

En référence à la figure 9, les enroulements W3A', W3B' sont par exemple similaires aux enroulements W3A, W3B.

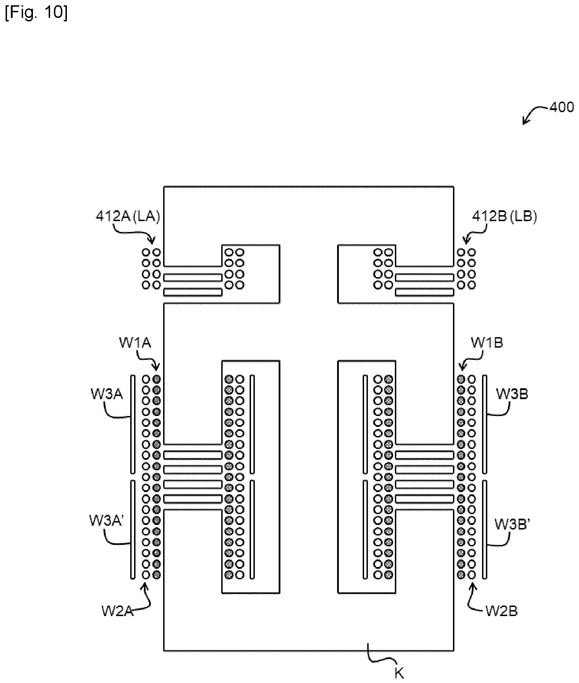

En référence à la figure 10, au lieu d'être unique comme sur les figures précédentes, chaque entrefer peut être distribué afin de réduire les pertes d'effet frangeant (de l'anglais « fringing effect »).

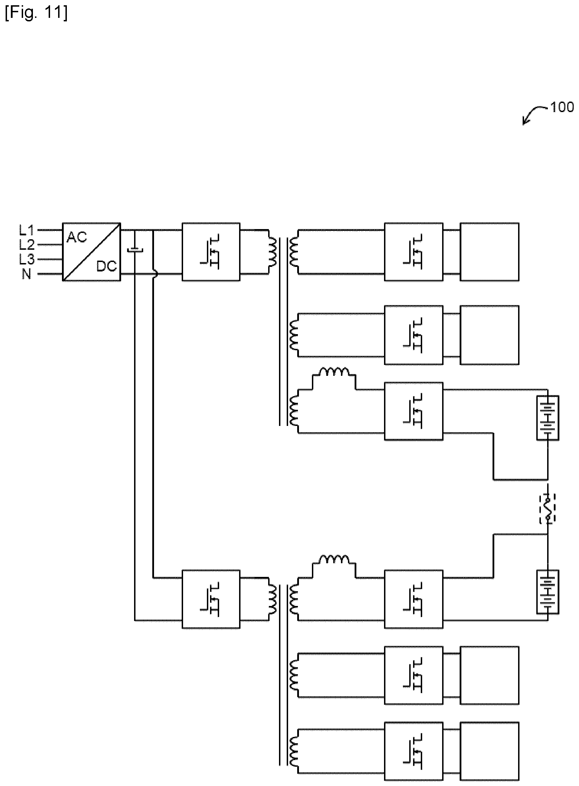

En référence à la figure 11, le cas de l'inductance LA en série avec l'enroulement W2A et de l'inductance LB en série avec l'enroulement W2B est illustré.

En conclusion, il apparaît clairement qu'un composant électromagnétique intégré tel que celui décrit précédemment permet de mettre en oeuvre deux transformateurs et deux inductances avec un unique noyau magnétique.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Composant électromagnétique intégré (400), **caractérisé en ce qu'**il comporte :
- un noyau magnétique (K) formant :
• une première boucle (402A) et une deuxième boucle (402B) ayant une portion commune (404),
• une troisième boucle (502A) ayant une portion commune (504A) avec la première boucle (402A) et/ou la deuxième boucle (402B), et
• une quatrième boucle (502B) ayant une portion commune (504B) avec la première boucle (402A) et/ou la deuxième boucle (402B) ;
- au moins deux premiers enroulements (W1A, W2A, W3A) enroulés autour de la première boucle (406A) pour être magnétiquement couplés, hors des portions communes (404, 504A, 504B) ;
- au moins deux deuxièmes enroulements (W1B, W2B, W3B) enroulés autour de la deuxième boucle (406B) pour être magnétiquement couplés, hors des portions communes (404, 504A, 504B) ;
- un troisième enroulement (508A) enroulé autour de la troisième boucle (502A), hors des portions communes (404, 504A, 504B) ; et
- un quatrième enroulement (508B) enroulé autour de la quatrième boucle (502B), hors des portions communes (404, 504A, 504B).

2. Composant électromagnétique intégré (400) selon la revendication 1, dans lequel le composant (400) comprend au moins trois premiers enroulements (W1A, W2A, W3A) enroulés autour de la première boucle (406A) pour être magnétiquement couplés, hors des portions communes (404, 504A, 504B).

3. Composant électromagnétique intégré (400) selon la revendication 1 ou 2, dans lequel le composant (400) comprend au moins trois deuxièmes enroulements (W1B, W2B, W3B) enroulés autour de la deuxième boucle (406B) pour être magnétiquement couplés, hors des portions communes (404, 504A, 504B).

4. Composant électromagnétique intégré (400) selon l'une quelconque des revendications 1 à 3, dans lequel les troisième et quatrième boucle (502A, 502B) présentent une portion commune (506), les enroulements (W1A, W2A, W3A, W1B, W2B, W3B, 508A, 508B) étant situés hors de cette portion commune (506).

5. Composant électromagnétique intégré (400) selon l'une quelconque des revendications 1 à 4, dans lequel le noyau magnétique (K) comporte :
- une branche centrale (602) ;
- des première et deuxième branches latérales (604A, 604B) ; et
- trois branches transverses (702, 704, 706) s'étendant d'une des branches latérales (604A, 604B) à l'autre en traversant la branche centrale (602).

6. Composant électromagnétique intégré (400) selon la revendication 5, dans lequel les premiers enroulements (W1A, W2A, W3A) sont enroulés autour de la première branche latérale (604A) et les deuxièmes enroulements (W1B, W2B, W3B) sont enroulés autour de la deuxième branche latérale (604A).

7. Composant électromagnétique intégré (400) selon la revendication 5 ou 6, dans lequel une ou plusieurs des branches (602, 604A, 604B, 702, 704, 706) sont droites.

8. Composant électromagnétique intégré (400) selon l'une quelconque des revendications 5 à 7, dans lequel une ou plusieurs des branches (602, 604A, 604B, 702, 704, 706) ont une section rectangulaire.

9. Composant électromagnétique intégré (400) selon l'une quelconque des revendications 1 à 8, dans lequel une ou plusieurs des boucles présentent un entrefer (406A, 406B, 510A, 510B), unique ou bien distribué.

10. Composant électromagnétique intégré (400) selon l'une quelconque des revendications 5 à 7 et la revendication 9, dans lequel le ou les entrefers (406A, 406B, 510A, 510B) sont situés hors de la branche centrale (602).

11. Composant électromagnétique intégré (400) selon l'une quelconque des revendications 1 à 10, dans lequel le troisième enroulement (508A) est réalisé avec un même fil qu'un des premiers enroulements (W1A, W2A) et/ou le quatrième enroulement (508B) est réalisé avec un même fil qu'un des deuxième enroulements (W1B, W2B).

12. Composant électromagnétique intégré (400) selon l'une quelconque des revendications 1 à 11, dans lequel au moins un (W3A) des premiers enroulements est réalisé par une feuille ou bien une barre omnibus et/ou au moins un (W3B) des deuxièmes enroulements est réalisé par une feuille ou bien une barre omnibus.

13. Installation électrique (108) pour un engin de mobilité (100), comportant :
- une prise de charge (114) destinée à recevoir une tension alternative ;
- des première et deuxième batteries haute tension (110A, 110B) ;
- des premier et deuxième réseaux basse tension (116A, 116B) ; et
- un système de distribution électrique (118) interconnectant la prise de charge (114), les batteries haute tension (110A, 110B) et les réseaux basse tension (116A, 116B), comportant :
• une capacité d'entrée (C),
• un convertisseur AC-DC (202) entre la prise de charge (114) et la capacité d'entrée (C),
• un premier transformateur (204A),
• un premier convertisseur dit de charge (206A), DC-DC, bidirectionnel et isolé, entre la capacité d'entrée (C) et la première batterie haute tension (110A), comportant : - un enroulement primaire (W1A) et un enroulement secondaire (W2A) du premier transformateur (204A) couplés l'un à l'autre, - une première inductance (LA) en série avec l'un de l'enroulement primaire (W1A) et de l'enroulement secondaire (W2A) du premier transformateur (204A), - un convertisseur (208A) entre la capacité d'entrée (C) et l'enroulement primaire (W1A) du premier transformateur (204A) et, le cas échéant, la première inductance (LA), et - un convertisseur (210A) entre, d'une part, l'enroulement secondaire (W2A) du premier transformateur (204A) et, le cas échéant, la première inductance (LA) et, d'autre part, la première batterie haute tension (110A),
• un premier convertisseur dit d'alimentation (212A), DC-DC, bidirectionnel et isolé, entre la première batterie haute tension (110A) et le premier réseau basse tension (116A), comportant : - un enroulement tertiaire (W3A) du premier transformateur (204A) couplé à l'enroulement secondaire (W2A) du premier transformateur (204A), - le convertisseur (210A) entre, d'une part, l'enroulement secondaire (W2A) du premier transformateur (204A) et, le cas échéant, la première inductance (LA) et, d'autre part, la première batterie haute tension (110A), et - un convertisseur (214A) entre, d'une part, l'enroulement tertiaire (W3A) du premier transformateur (204A), d'autre part, le premier réseau basse tension (116A),
• un deuxième transformateur (204B),
• un deuxième convertisseur dit de charge (206B), DC-DC, bidirectionnel et isolé, entre la capacité d'entrée (C) et la deuxième batterie haute tension (110B), comportant : - un enroulement primaire (W1B) et un enroulement secondaire (W2B) du deuxième transformateur (204B) couplés l'un à l'autre, - une inductance deuxième (LB) en série avec l'un de l'enroulement primaire (W1B) et de l'enroulement secondaire (W2B) du deuxième transformateur (204B), - un convertisseur (208B) entre la capacité d'entrée (C) et l'enroulement primaire (W1B) du deuxième transformateur (204B) et, le cas échéant, la deuxième inductance (LB), et - un convertisseur (210B) entre, d'une part, l'enroulement secondaire (W2B) du deuxième transformateur (204B) et, le cas échéant, la deuxième inductance (LB) et, d'autre part, la deuxième batterie haute tension (110B),
• un deuxième convertisseur dit d'alimentation (212B), DC-DC, bidirectionnel et isolé, entre la deuxième batterie haute tension (110B) et le deuxième réseau basse tension (116B), comportant : - un enroulement tertiaire (W3B) du deuxième transformateur (204B) couplé à l'enroulement secondaire (W2B) du deuxième transformateur (204B), - le convertisseur (210B) entre, d'une part, l'enroulement secondaire (W2B) du deuxième transformateur (204B) et, le cas échéant, la deuxième inductance (LB) et, d'autre part, la deuxième batterie haute tension (110B), et - un convertisseur (214B) entre, d'une part, l'enroulement tertiaire (W3B) du deuxième transformateur (204B) et, d'autre part, le deuxième réseau basse tension (116B), et
• un composant électromagnétique (400) selon l'une quelconque des revendications 1 à 12, intégrant les transformateurs (204A, 204B) et les inductances (LA, LB).

14. Engin de mobilité (100) comportant une installation électrique (108) selon la revendication 13.
